Europäisches Patentamt

European Patent Office

Office européen des brevets

(19)

(11) Publication number: 0 250 868
A2

(12) **EUROPEAN PATENT APPLICATION**

(21) Application number: 87107668.3

(22) Date of filing: 26.05.87

(51) Int. Cl.⁴: **G09G 1/16**

(30) Priority: 23.06.86 US 877042

(43) Date of publication of application:
07.01.88 Bulletin 88/01

(84) Designated Contracting States:
**DE FR GB IT**

(71) Applicant: **International Business Machines
Corporation
Old Orchard Road
Armonk, N.Y. 10504(US)**

(72) Inventor: **Gonzalez-Lopez, Jorge
8 Hewlett Road
Red Hook New York 12571(US)**
Inventor: **Iida, Yoshi
10c Lake Katrine Apts.
Lake Katrine New York 12449(US)**
Inventor: **Kamei, Akishi
2-2 Fairview Gardens, Merritt Avenue
Kingston New York 12401(US)**
Inventor: **Liang, Bob Chao-chu
Box 522, Ryan Drive
West Hurley New York 12491(US)**

(74) Representative: **Appleton, John Edward
IBM United Kingdom Limited Intellectual
Property Department Hursley Park
Winchester Hampshire SO21 2JN(GB)**

(54) Method and apparatus for area fill in a raster graphics system.

(57) An improved area fill subsystem for a computer graphics display system. An extra bit plane is provided for storing marked pixels which are used in the area fill operation. Novel circuitry permits the generation of the marked pixels for vectors as in the order they are read out from the system memory. This lends itself to more efficient pipeline processing. In addition, special scan area register logic is provided which limits the portion of the screen scanned in area fill to only that portion of the screen containing the current polygon being processed.

EP 0 250 868 A2

## METHOD AND APPARATUS FOR AREA FILL IN A RASTER GRAPHICS SYSTEM

The present invention relates to computer graphics generation and display, and more particularly to a method and apparatus for providing an improved area fill for display polygons.

Computer graphics display systems are computer systems which generate and display graphic images on a raster scan display device. Such graphic images are derived from digital data stored in the system's memory. The data is typically stored in the form of points in a two or three dimensional coordinate system, wherein the points correspond to the vertices of polygons, such as triangles. The polygons form the "building blocks" of larger objects which are the ultimate display objects.

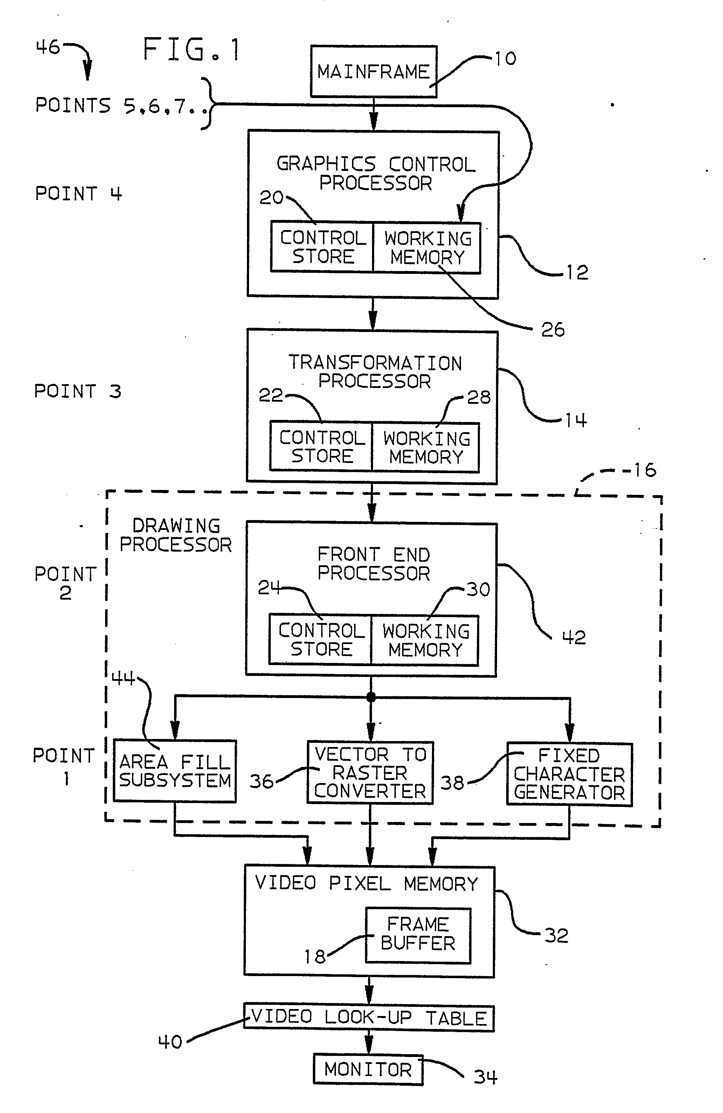

A typical raster graphics display system is illustrated in Fig. 1. The graphics system interfaces with a mainframe computer 10 and comprises a graphics control processor (GCP) 12, a transformation processor (TRP) 14, and a drawing processor (DRP) 16. These elements operate in a pipeline. They are typically special purpose processors which execute graphics programs residing in Working Memory 26, using a set of pre-stored microcoded programs residing in their own writable control store 20, 22, 24. They use their own Working Memory 26, 28, 30 to store constants and parameters used by the program. The graphics programs are loaded from the mainframe computer 10 to the graphics display system via a communications link.

In such systems, the data flow is from the GCP 12 Working Memory 26, through the GCP12-TRP14-DRP16 pipeline to a Video Pixel Memory (VPM) 32, then to a Video Look-Up Table 40, and then to a monitor 34 for display.

For basic geometric primitives--lines (vectors), markers, and polygons (the edges of polygons)--the functional partition of such a graphics system is as follows. The GCP 12 fetches and processes instructions from its Working Memory 26. It passes geometric data to the TRP 14 for transformation and clipping. It also passes the command (e.g. frame control) orders to the DRP 16.

The TRP 14 receives the geometric data (e.g. end points of lines) from the GCP 12. The TRP 14 transforms and clips the coordinates of the data, and passes the data to the DRP 16 for drawing on the screen. The DRP 16 receives the geometric data--line, characters, markers, polygons (to be filled) from the TRP 14--and rasterizes the data to the Video Pixel Memory 32 for display. It also receives the command orders from the GCP 12. The DRP 16 includes a Front End Processor 42, an Area Fill Subsystem 44, a Vector to Raster Converter 36, and a Fixed Character Generator 38.

The above-described system operates in a pipeline manner. Accordingly, at any given point in time, several points may be in the process of being operated on by the various elements of the system, as shown by point references 46 in Fig. 1. As shown, at an arbitrary point in time selected for illustration, point 1 of a display object is being processed by the Area Fill Subsystem 44, as point 2 is being processed by the Front End Processor 42, point 3 is being processed by TRP 14, point 4 is being processed by GCP 12, and points 5, 6 and beyond still reside in Working Memory 26.

The above aspects of computer graphics systems are, in general, known. An example of such a system is the IBM 5080 Graphics System, Model 2. It is described in the IBM 5080 Graphics System: Principles of Operation, 5085 Model 2 , copyright 1986, IBM, Publ. No. GA23-2012-0, available through IBM Corp., and incorporated herein by reference.

The present invention relates to the functions provided by the Area Fill Subsystem 44.

One of the more efficient prior art area fill techniques is the Scan Line Algorithm based technique, described in Foley and Van Dam "Fundamentals of Computer Graphics", Addison-Wesley 1982, pp. 456-460. This will now be presented for background.

Consider an area defined by its boundary, which in turn is defined by a sequence of consecutive vertices (two consecutive vertices yield an edge of the boundary):

x0, y0;
x1, y1;
x2, y2;

xn, yn;

where (x0,y0) = (xn, yn).

Program flow according to this prior art technique is as follows:

    1. Reading in x, y data.

2. Calling a Polygon Sorting Subroutine to sort the edges into an Edge Table according to the minimum y-values of the end points.

3. After sorting all the edges, entering the Drawing phase:

    a. using the Scan-Line Algorithm to fill the polygon.

    b. filling the polygon from the bottom to the top (incremental y-values).

For each y-value, the scan line runs from left to right. For each scan line, we only consider those edges it intersects. Those edges are sorted according to the x-coordinate of the intersections, and arranged in an Active Edge Table.

Assuming the x-values are c1, c2, c3, c4,..., cn,

the line segment is drawn from c1 to c2, from c3 to c4, etc. to fill the polygon on that scan line.

Step 3, above, can be implemented in hardware.

To eliminate the need for sorting in the technique described above, an extra Bit Plane can be used to implement Area Fill. This is accomplished as follows.

1. Plotting the edges of the polygon on the extra bit plane (Fig. 1) by using the Bresenham Line Generating Algorithm (Bresenham, "Algorithm for Computer Control of Digital Plotter" IBM Systems Journal (1) 1965, pp. 25-30). The plotted pixels (of the boundary of the polygon) on this bit plane are called Marked Pixels.

2. Using the Scan Line Algorithm to fill the polygon in the Frame Buffer. The polygon is filled from the bottom to the top (incremental y-values). For each y-value, the scan line runs from left to right.

If the scan line hits a marked pixel, then an Fflag is set to 1 and the horizontal line is filled until it hits another marked pixel to cause the Fflag to be set to 0 at which time filling is stopped.

The x-value of the scan line is incremented until it hits another marked pixel, at which time the above process is repeated; or it reaches the right hand side of the screen, and the process ends.

The above-described prior art approach suffers certain problems due to the pixel-line nature of the raster devices used for display. These problems generally arise from the possibility of an odd number of pixels occupying a segment along a scan line in an edge. Several examples illustrate these problems:

1.Single pixel at the vertex

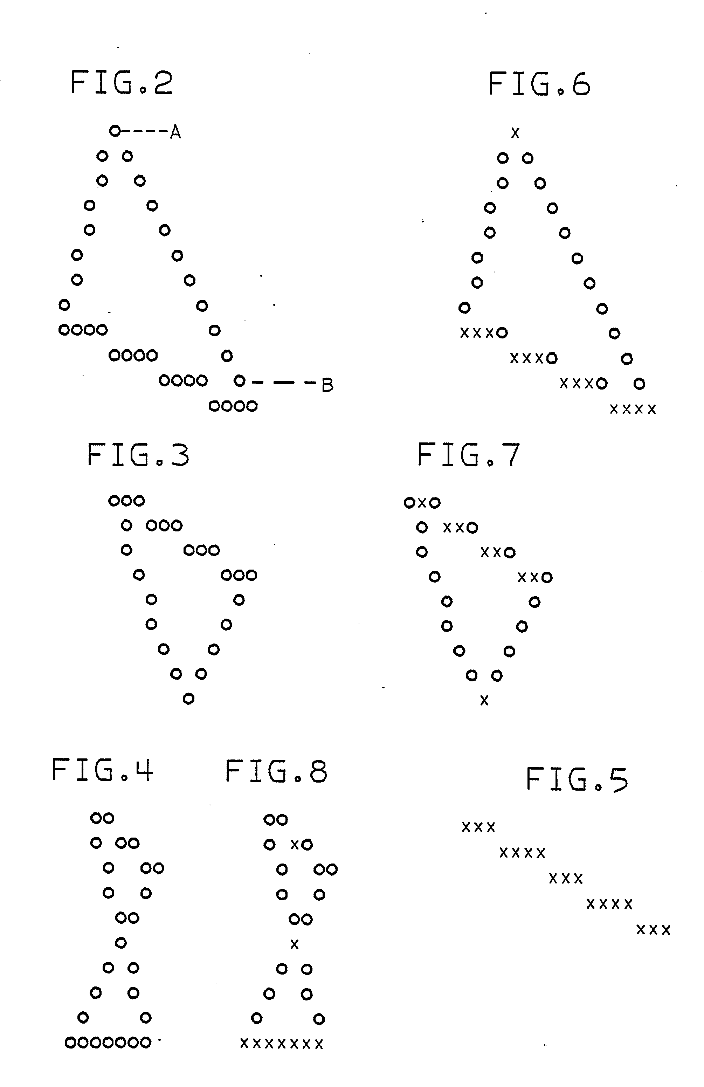

In Fig. 2, the scan line fills the line from pixel A to the pixel at the top to the right of the screen.

2. Horizontal line

Refer to the triangle of Fig 2 again. The second line from the bottom, which has 5 pixels, will cause the line from the pixel B to the right side of the screen to be filled.

3. Mixture of the last two items

Because of the Bresenham Algorithm, we may have odd number of pixels on the top of a triangle, such as is shown in Fig. 3.

4. Several edges might cross at the same point:

For the bowtie polygon in Fig. 4, the Scan-Line Algorithm fills the line from the intersection point to the right side of the screen.

A solution has been proposed to the above-described problems, in the form of the imposition of rules in drawing the edges. It is described in A. Gay "Experience in Practical Implementation of Boundary-Defined Area Fill", NATO ASI Series, Vol. 17, Fundamental Algorithms for Computer Graphics, Edited by R. A. Earnshaw, 1985. The following is a summary of this approach. First, however, to clarify the terminology:

In the Bresenham algorithm, if the line is in octant 1, 4, 5, or 8; then the line thus generated will have horizontal pixel movement. Referring to Fig. 5, there are two horizontal moves, followed by one diagonal move, followed by three horizontal moves, one diagonal move, etc.

Each horizontal line segment is called a RUN.

In Fig. 5 there are runs of length 3, 4, 3, 4, 3.

The following summarizes the rules derivable from the above described A. Gay technique.

1. In drawing the edges on the extra bit plane, always use the XOR mode (the plotted pixel value is the result of the Exclusive OR of the input pixel value and the existing value at that pixel position.)

2. Do not plot the first pixel of a line.

3. Do not plot horizontal lines (if delta y = 0, do not plot).

4. For non-horizontal lines, plot from bottom to top.

5. For each horizontal run, only draw the first pixel on the run (if the pixel is not the starting point of a vector).

Figs. 6, 7 and 8 illustrate the Plotting of edges on the extra bit plane illustrated in connection with Figs. 2, 3 and 4 using this method. The "x's" show pixels not drawn, which would have otherwise been drawn as in Figs. 2, 3 and 4.

The above-described prior art suggested approach solves the odd-number-of-pixels problem, but has limitations desirable to eliminate. First, in the scanning phase of area fill, if the polygon is very small, the entire screen must be scanned from left to right. This is not very efficient. Second, if the colour of the boundary specified by the user is different from the colour of the interior of the polygon, or if the boundary is not to be painted at all, either the method fails or the boundary list in the memory must be traversed again. This causes performance degradation. Third, the above-described approach does not lend itself to efficient processing in a pipeline graphics processing system. For example, in a pipeline graphics processing system such as is shown in Fig. 1, assume the end points of line segments are the following:

point 1 (100, 100)

point 2 (200, 50)

point 3 (100, 0)

point 4 ( 50, 50)

point 5 (100, 100) ( = point 1)

To apply the above-described prior art technique to this case, the Front End Processor 42 of the DRP 16 (Fig. 1) must have a buffer for the coordinates of at least two points, since it requires that processing be from bottom to top. Thus, it must feed the Area Fill Subsystem 44 in the following order:

point 2

point 1

point 3

point 2

point 3

point 4

point 4

point 5

which is not the most efficient order of point processing for such a pipelined graphics processing system. In fact, it requires at least one additional stage of pre-processing to determine the correct order of points for subsequent processing. The most efficient order of point processing is simply:

point 1

point 2

point 3

point 4

point 5 ( = point 1).

The present invention provides a solution to these problems.

According to the present invention there is provided a computer graphics display system including system memory and a processor for converting data corresponding to the position of polygon display object vertices to pixel data for read-out to a display, a system for providing area fill for the objects, comprising:

a) pixel memory means for storing a value for each pixel in a display object, including means for storing for separate identification a value for each marked edge pixel of the object;

b) boundary means for generating the pixels comprising the boundary of said display object;

c) first line generator means for generating marked edge pixels in said pixel memory means by processing pairs of said display object vertices by means of an operation that utilizes the value of the next pixel to be processed in processing a current pixel;

d) second line generator means, responsive to said marked edge pixels, for generating the pixels of the interior of said display object; and

e) processor means for controlling the operation of said memory means, said boundary means, said register means and said line generator means to generate and store the boundary pixels and the interior pixels in said pixel memory means.

The present invention provides a computer graphics display system including a processor for converting data corresponding to the position of polygon display object vertices to raster scan data and for providing the raster scan data to a buffer for raster scan readout to a display. The system includes a subsystem for providing area fill for the objects. This subsystem includes storage for permitting the storage of a multi-bit representation of each pixel in an object to be displayed, including a bit plane for storing information regarding marked edge pixels of the object. A first line generator is also provided, for generating fill lines. A second line generator is provided for generating marked edge pixels in the bit plane. Further, a register is provided for storing coordinate values corresponding to the coordinate extent of the portion of the screen containing an object to be displayed. Finally, a processor is provided for controlling the operation of the storage and the line generators to fill objects to be displayed by operating only on that portion of the screen bounded by the stored coordinate values.

In this way, the X direction extent, or the Y direction extent of a polygon, or both the X and Y direction extent of a polygon can be determined so as to isolate the area to be scanned. These extents may then be stored in one or more hardware registers and be used to keep track of the X or Y extent, or both. This eliminates the inefficiency that results from the requirement of scanning the entire screen where only small polygons are to be displayed.

Further, the extra bit plane for storing Boundary pixels eliminates the need for multiple traverses of the boundary list in memory in those cases where the colour of the boundary is different from the colour of the interior of the polygon.

Finally, the invention provides a subsystem which permits efficient use of a pipeline graphics processing system without the need for buffering one or more points in the course of processing.

In order that the invention may be fully understood it will now be described by way of example with reference to the accompanying drawings, in which:

Fig. 1 is a block diagram of a prior art pipeline graphics processing system, showing data flow therein.

Fig. 2 is a pixel diagram illustrating potential problems which may arise in area fill.

Fig. 3 is a pixel diagram like that of Fig. 2.

Fig. 4 is a pixel diagram like that of Fig. 2.

Fig. 5 is a pixel diagram illustrating the function of the Bresenham algorithm.

Fig. 6 is a pixel diagram illustrating a prior art approach to the use of an extra bit plane.

Fig. 7 is a pixel diagram like that of Fig. 6.

Fig. 8 is a pixel diagram like that of Fig. 6.

Fig. 9 is a block diagram of the preferred embodiment of the present invention.

Fig. 10(a) and 10(b) together form a flow chart showing the operation of the Vector Generator 124 and Marked Pixel Extraction Logic 112 of Fig. 9.

Figs. 11(a) - 11(g) are pixel diagrams showing examples of the generation of marked pixels.

Fig. 12 is a partial diagram of the embodiment shown in Fig. 9, illustrating the Initialize mode.

Fig. 13 is a partial diagram of the embodiment shown in Fig. 9, illustrating the Boundary Plot mode.

Fig. 14 is a diagram of the Marked Pixel Extraction Logic 112.

Fig. 15 is a partial diagram of the embodiment shown in Fig. 9, illustrating the Scanning Mode.

Fig. 16 is a partial diagram showing the embodiment shown in Fig. 9, illustrating the Clear mode.

Fig. 17 is a diagram of a portion of a display, which aids in understanding the Scan Area Register Logic 128.

Fig. 18 is a diagram of the Scan Area Register Logic 128.

Fig. 19 is a diagram illustrating read-out from the Area Fill Bit Plane 102 and the Boundary Bit Plane 100 in Area Fill mode.

Fig. 20 is a diagram of the Interior Detect Circuit 150 of Fig. 19.

Fig. 21 is a diagram of the Exclusive OR/Passthru Logic 106 of Fig. 9.

In the drawings, like elements are designated with similar reference numbers, and identical elements in different specific embodiments are designated by identical reference numbers.

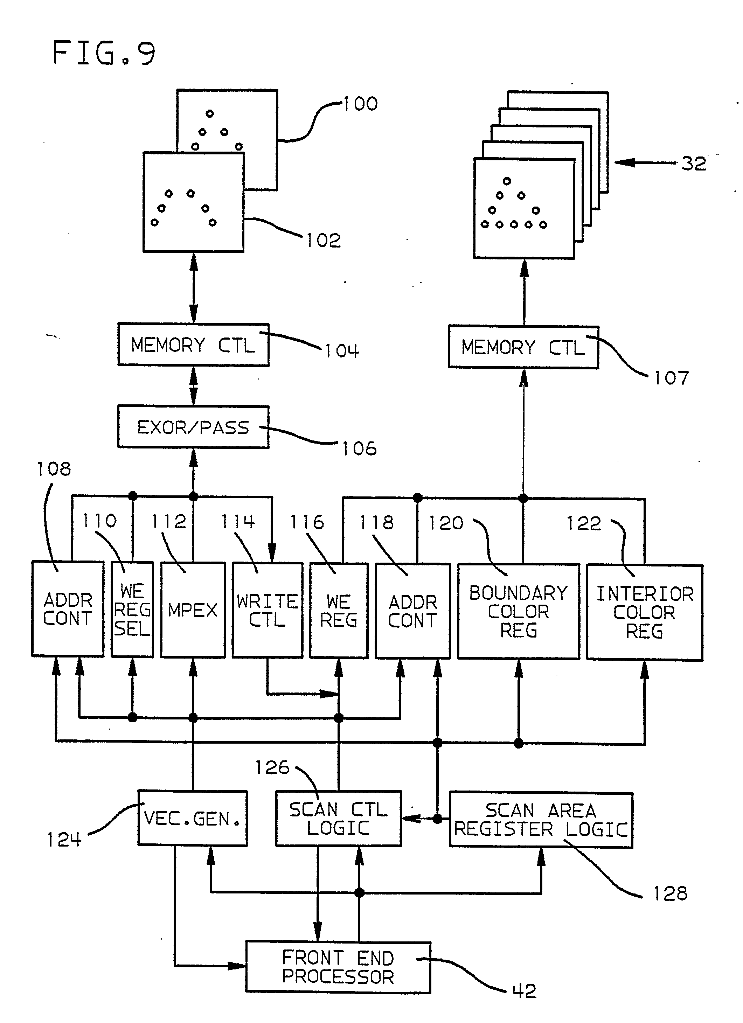

Fig. 9 is a block diagram of the preferred embodiment of the Area Fill Subsystem 44 of the present invention operating in conjunction with the Front End Processor 42 and Video Pixel Memory 32. Two extra Bit Planes are provided. One is called the Boundary Bit Plane 100 and the other is called the Area Fill Bit Plane 102. A conventional Memory Control 104 is provided for the extra Bit Planes 100, 102. Also provided is Exclusive OR/Passthru Logic 106. Conventional Memory Control 107 is also provided for Video Pixel Memory 32. Other circuitry shown in Fig. 9 is an Address Counter 108 for Bit Planes 100, 102, a Write Enable Selector Logic 110, also for Bit Planes 100, 102, Marked Pixel Extraction circuitry 112 and WRITE Control circuitry 114 for Bit Planes 100, 102. A Write Enable Register 116 and an Address Counter 118 are provided for the Video Pixel Memory 32. Also provided for Video Pixel Memory 32 are a Boundary Color Register 120 and an Interior Color Register 122. A Vector Generator 124 is provided as is Scan Control Logic 126. Finally, Scan Area Register Logic 128 is provided.

The operation of the embodiment depicted in Fig. 9 is described below, after the following review of the Bresenham algorithm.

The Bresenham algorithm for line generating in raster display devices can be briefly described as follows:

Assume the initial point of a line is (x1, y1), and the end point is (x2, y2). Then,

delta x = x2 - x1, and

delta y = y2 - y1.

Assume that delta x > delta y > 0, i.e. the line is in the first octant.

Let C1 = 2delta y - 2delta x and let C2 = 2delta y.

The program for implementing the algorithm is as follows.

```
Program Draw Pixel


    D = 2delta y - delta x

    x = x1

    y = y1

    Draw (x1, y1)

        While x < x2

            x = x + 1

            if D < 0

                D = D + C2      /*horizontal movement*/

            else

                y = y + 1       /*diagonal movement*/

                D = D + C1

            Draw (x,y)

        End (while).
```

The operation of the embodiment depicted in Fig. 9 will now be described.

The above program for implementing the Bresenham algorithm is used for vector generation in all octants by using the 3 sign bits of delta x, delta y, and |delta y| - |delta x.| Llewelyn & Robins "Generation of Points Using Bresenham's Algorithm" IBM Technical Disclosure Bulletin, Vol. 20 (9) 2/1978) gives detailed information on parameter set up. Detailed information on hardware set up is found in J. Bresenham, "Algorithm for Computer Control of Digital Plotter, "IBM Systems Journal, 1965, pp. 25-30, and in J. Foley & Van Dam, Fundamentals of Interactive Computer Graphics, Addison-Wesley, 1982, pp. 433-436. In the preferred embodiment herein it is implemented in the Vector Generator 124. The signals thus generated by Vector Generator 124 are used in the plotting of pixels for boundaries of polygons in Video Pixel Memory 32 and Boundary Bit Plane 100. Those signals are posx, dirx, posy, diry, and wpix.

In the plotting of pixels, two kinds of situations are possible:

1. A conventional graphics MOVE operation to the position (x1,y1) (the first pixel of a boundary line segment). In such a MOVE operation, no incremental plotting is required, since it is the first pixel for the line.

2. An incremental plotting of 1 pixel - moving the (x,y) position to one of the 8 neighbouring positions by one pixel. In this case, the posx, dirx, posy, and diry signals are needed.

For x-direction moves, the following applies:

|         | posx | dirx     |
|---------|------|----------|
| right   | 1    | 1        |
| left    | 1    | 0        |
| no move | 0    | 0 or 1.  |

For y-direction moves, the following applies:

7

```
                    posy        diry

            up       1           1
            down     1           0
            no move  0           0 or 1.
```

The inputs to the Vector Generator 124 are delta x and delta y. They are loaded by the Front End Processor 42 into the Vector Generator 124, which then calculates delta y, |delta x| and |delta y| . Posx, dirx, posy, and diry are determines, based upon the aforementioned signals, as shown in Table 1.

| Input | | delta x - delta y | D | Output | | | |
|---|---|---|---|---|---|---|---|
| delta x | delta y | delta x - delta y | D | posx | dirx | posy | diry |
| + | + | + | - | 1 | 1 | 0 | 1 |
| + | + | + | + | 1 | 1 | 1 | 1 |
| + | + | - | - | 0 | 1 | 1 | 1 |
| + | + | - | + | 1 | 1 | 1 | 1 |
| - | + | - | - | 0 | 0 | 1 | 1 |
| - | + | - | + | 1 | 0 | 1 | 1 |
| - | + | + | - | 1 | 0 | 0 | 1 |
| - | + | + | + | 1 | 0 | 1 | 1 |
| - | - | + | - | 1 | 0 | 0 | 0 |
| - | - | + | + | 1 | 0 | 1 | 0 |
| - | - | - | - | 0 | 0 | 1 | 0 |
| - | - | - | + | 1 | 0 | 1 | 0 |
| + | - | - | - | 0 | 1 | 1 | 0 |
| + | - | - | + | 1 | 1 | 1 | 0 |
| + | - | + | - | 1 | 1 | 0 | 0 |
| + | - | + | + | 1 | 1 | 1 | 0 |

TABLE I

It will be noted that all possible moves in each of the eight octants are covered by Table 1. The output of the Vector Generator 124 is used to control the writing of the boundary line segments to the Boundary Bit Plane 100, the Area Fill Bit Plane 102, and Video Pixel Memory 32. This is described in more detail below.

The wpix signal differentiates between draw and move operations. When wpix is a "1", a draw operation is indicated. When wpix is "0", an incremental move operation is indicated. In an incremental move operation, the address counters are updated, but no pixel is written. In a draw operation the address counters are updated and a pixel is written as well.

The rules for determining whether to draw the marked pixels of the boundary of the polygon to be filled in the Area Fill Bit Plane 102 are:

    1. Plotting marked pixels on the Area Fill Bit Plane 102 is done in the XOR mode.

    2. Horizontal lines are not plotted (if delta y = 0, do not plot.

8

3. The Bresenham Algorithm is used to generate the pixels of the line. To determine whether the current pixel (x,y) is a marked pixel, the next one (x',y') is generated.

    a. If y' = y; then (x,y) is not plotted.

    b. If y' > y; then (x,y) is plotted.

    c. If y' < y, and if (x,y) is not the first pixel on the line segment with y' < y; then (x,y) is plotted.

4. If delta y is negative, the last pixel of the line is plotted.

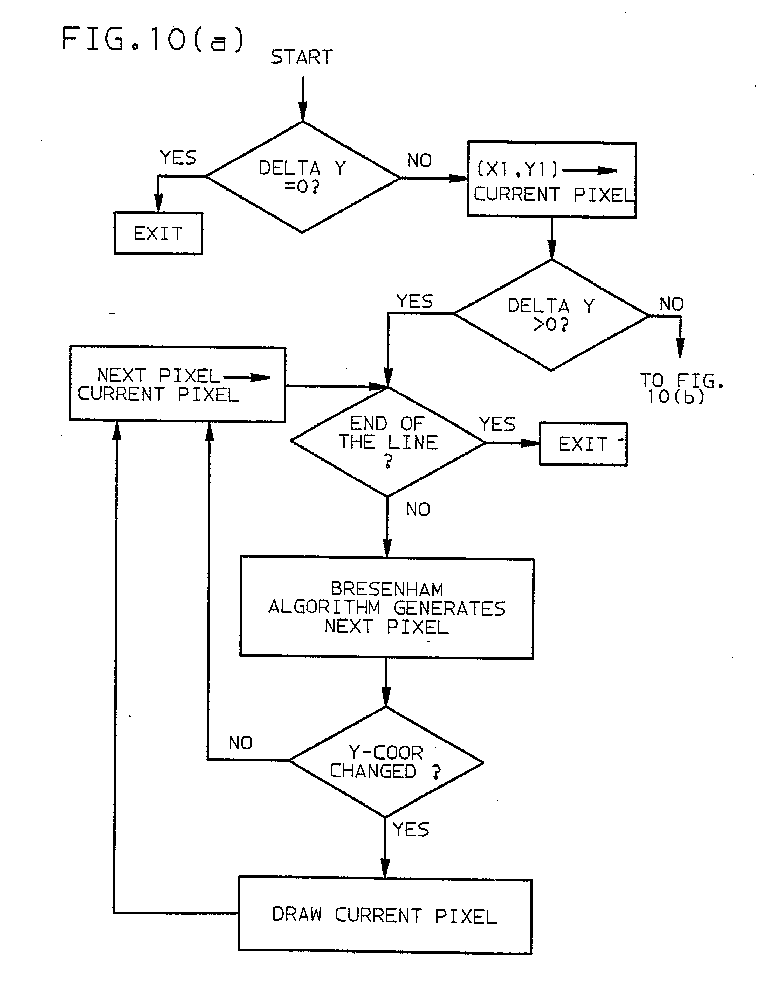

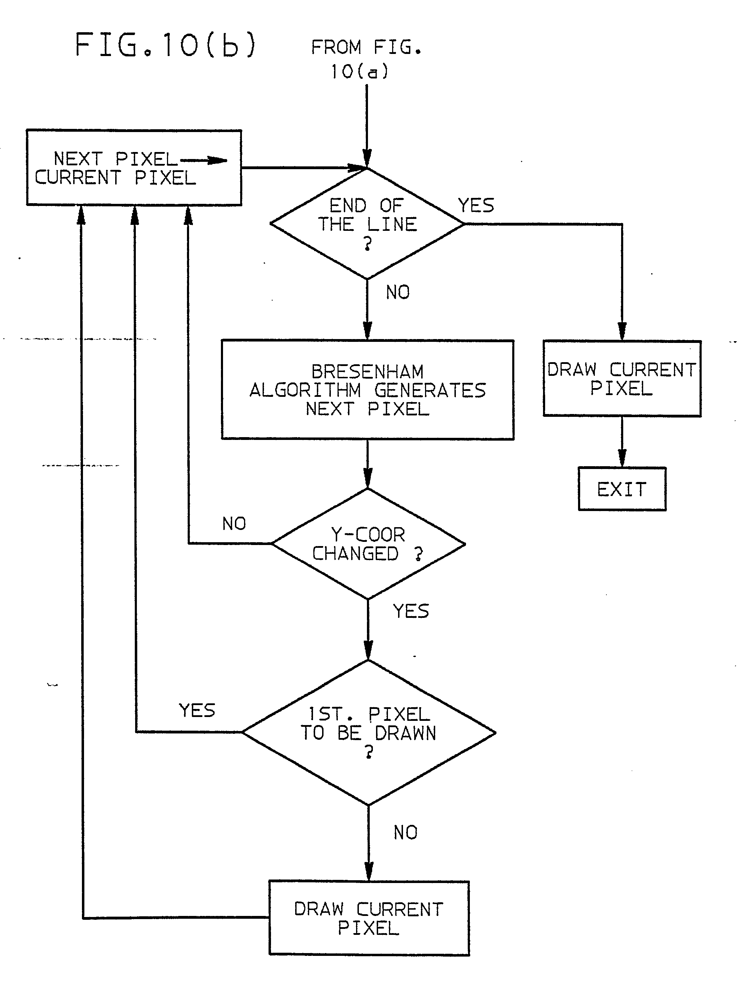

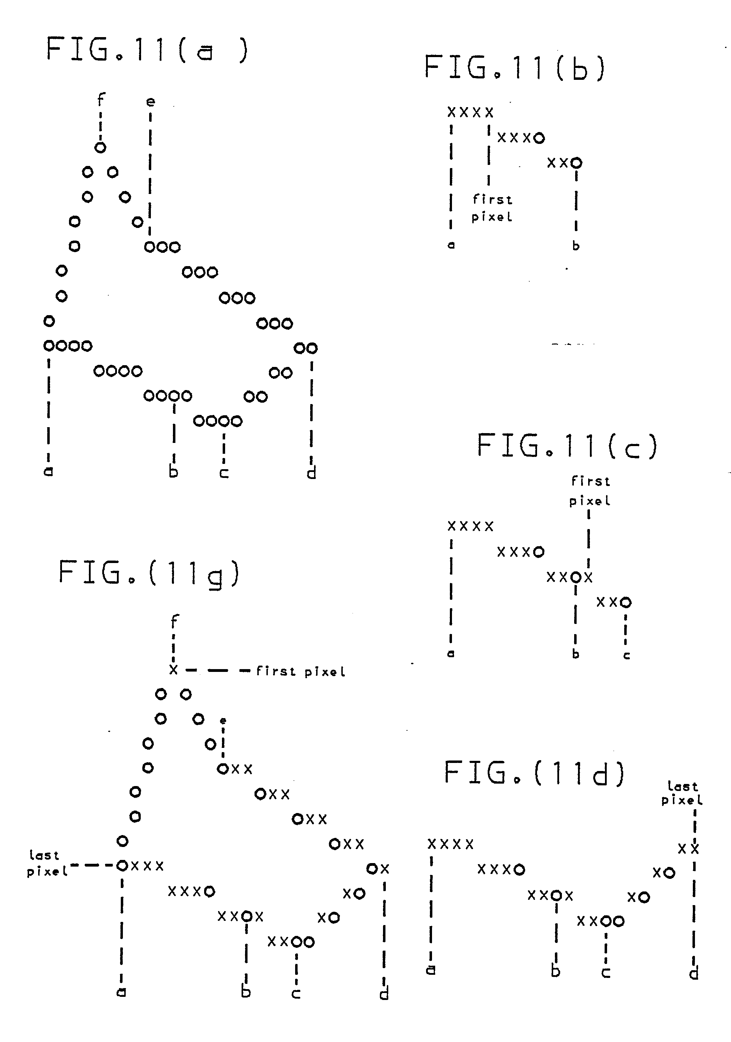

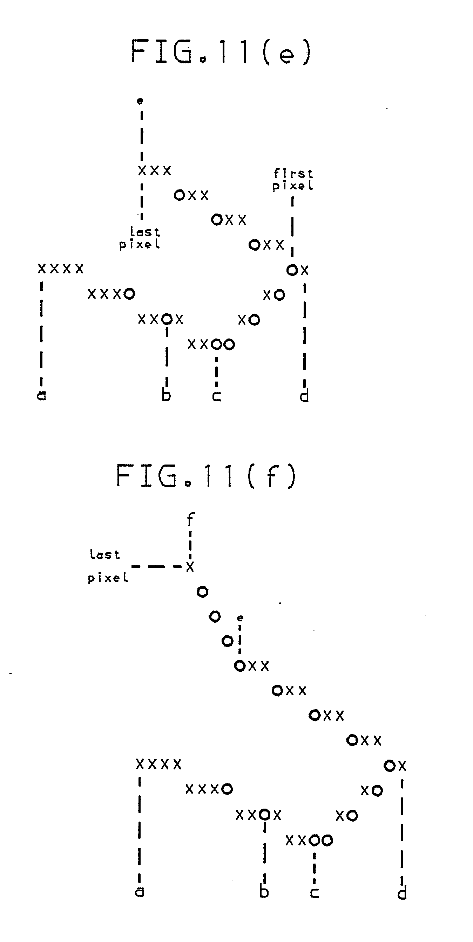

The flow chart for generating the marked pixels on the Area Fill Bit Plane 102 is shown in Figs. 10(a) and 10(b). Seven examples are shown in Figs. 11(a)-11(f).

A signal called the WRITE signal is generated to implement this algorithm. This signal determines whether to write to Area Fill Bit Plane 102 or not. The WRITE signal is actually a data signal applied to the data input line of the Area Fill Bit Plane 102. If a pixel is to be written to the Area Fill Bit Plane 102, this signal is a '1', while if no pixel is to be written, it is a '0'. During the boundary plot mode of operation, writing to both the Boundary Bit Plane 100 and the Area Fill Bit Plane 102 is always write enabled. Thus, the WRITE signal, a data signal, implements the above described marked pixel extraction algorithm.

The Scan Area Register Logic 128 stores the end point addresses of a limited area to be scanned that includes the current polygon. These addresses are used in a comparison operation to determine when scanning ends.

The operation of the embodiment shown in Fig. 9 will now be described in more detail. This description is organized by the different modes in which the embodiment operates. Initialization mode is described first, followed by a description of the Boundary Plot mode, then a description of Scan mode, and finally Clear mode for the next area fill.

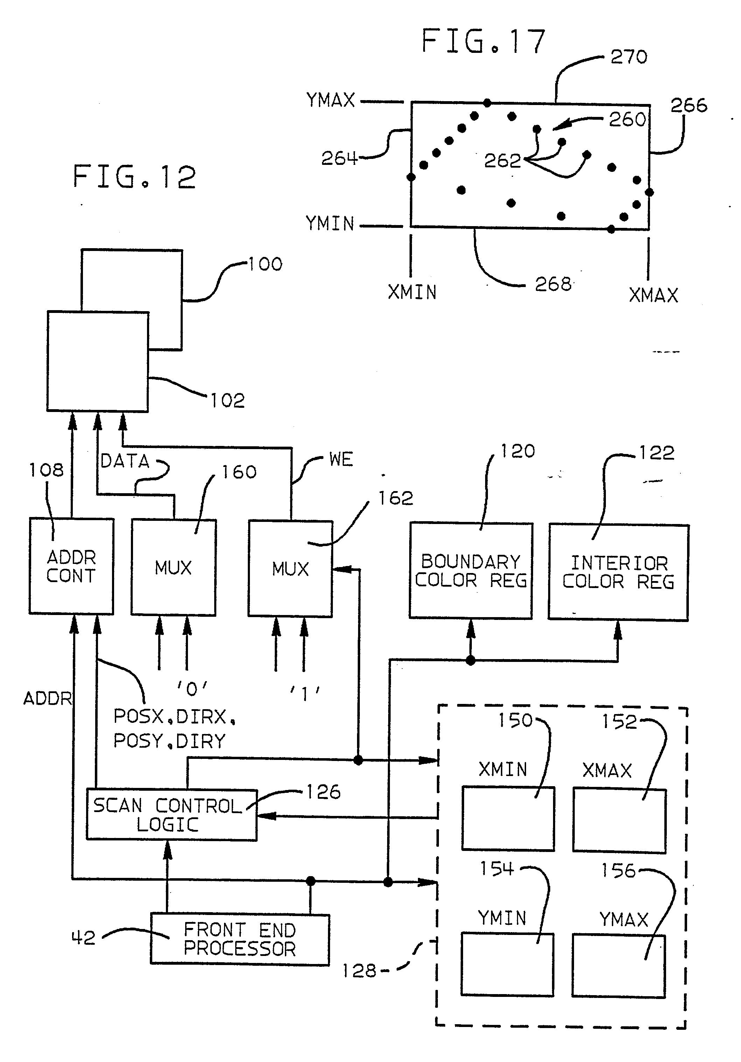

Referring now to Fig. 12, a partial diagram of the embodiment depicted in Fig. 9 is shown, illustrating those parts of the embodiment involved in Initialization for the first Area Fill operation after power-on. In this initialization operation, the Front End Processor 42 sets the four Scan Area Registers 150, 152, 154, 156 in Scan Area Register Logic 128 to cover the whole screen. Thus, xmin 150 is set to 0, xmax 152 is set to 1023, ymin 154 is set to 0 and ymax 156 is set to 1023. The Front End Processor 42 then issues a CLEAR command to the Scan Control Logic 126. The Scan Control Logic 126 then clears both the Area Fill Bit Plane 102 and the Boundary Bit Plane 100 by generating sequentially the scan controlling update signals for Address Counter 108 (posx, dirx, posy, diry) from the first address of the screen to the last address of the screen. The CLEAR command also is applied to two multiplexers 160, 162, (described in more detail below) which cause a "0" to be applied to the input data line for both the Boundary Bit Plane 100 and the Area Fill Bit Plane 102, and a "1" to be applied to the write enable (we) input of those two planes 100, 102.

The Front End Processor 42 then sets the Scan Area Registers 150, 152, 154, 156, to the following values: xmin 150 = 1023, xmax 152 = 0, ymin 154 = 1023 and ymax 156 = 0.

Finally, the Front End Processor 42 loads selected colour values into the Boundary Color Register 120 and the Interior Color Register 122. This completes the initialization for the first Area Fill operation after power-on.

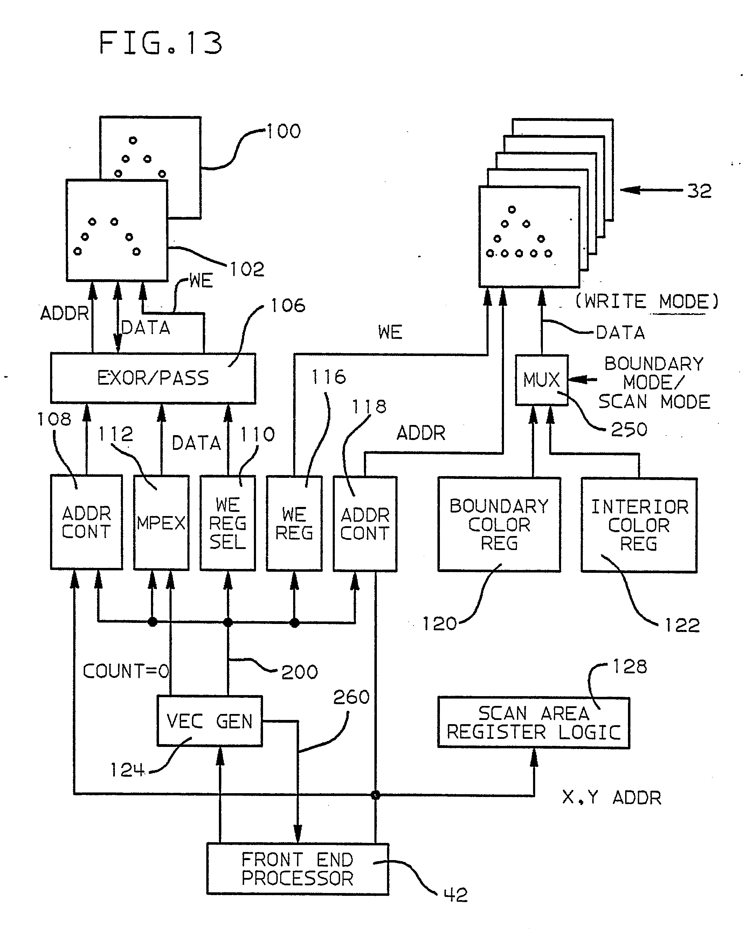

Referring to Fig. 13, a partial diagram of the embodiment depicted in Fig. 9 is shown, illustrating those parts of the embodiment involved in the Boundary Plot mode. Operation during the Boundary Plot mode will now be described. First, Front End Processor 42 loads Address Counters 108 and 118 and Scan Area Register Logic 128 with x1, y1, of the first vector to be processed.

Next, Front End Processor 42 enables and initializes both the Area Fill Bit Plane 102 and the Boundary Bit Plane 100. The Front End Processor 42 then loads the Vector Generator 124 with the values for delta x and delta y. Finally, Front End Processor 42 loads x2, y2 to the Scan Area Register Logic 128. In the Boundary Plot mode, based on the initial data loaded into it, the Vector Generator 124 clocks out on line 200 the signals posx, dirx, posy, diry and wpix. Posx and dirx are provided to Address Counter 108 as are posy and diry. Posy is provided to Marked Pixel Extraction Logic 112. Wpix is provided to the Write Enable Selector Logic 110, and to the Write Enable Register 116. Posx, dirx, posy and diry are also provided to Address Counter 118. Multiplexer 250 is selected to Boundary colour.

With each clock cycle, Address Counters 108 and 118 are being updated accordingly to the Bresenham algorithm from x1, y1, to x2, y2. As the addresses are updated, boundary pixels are written to the Boundary Bit Plane 100 and to Video Pixel Memory 32. Marked pixels are written to the Area Fill Bit Plane 102 in accordance with the algorithm described above, implemented by way of the Marked Pixel Extraction Logic 112 and the Exclusive OR/Passthru Logic 106, both described in detail below. Drawing continues until the last pixel in the vector is written, and then the next vector is loaded and the process just described is performed for that vector, and so on until the entire polygon boundary has been processed.

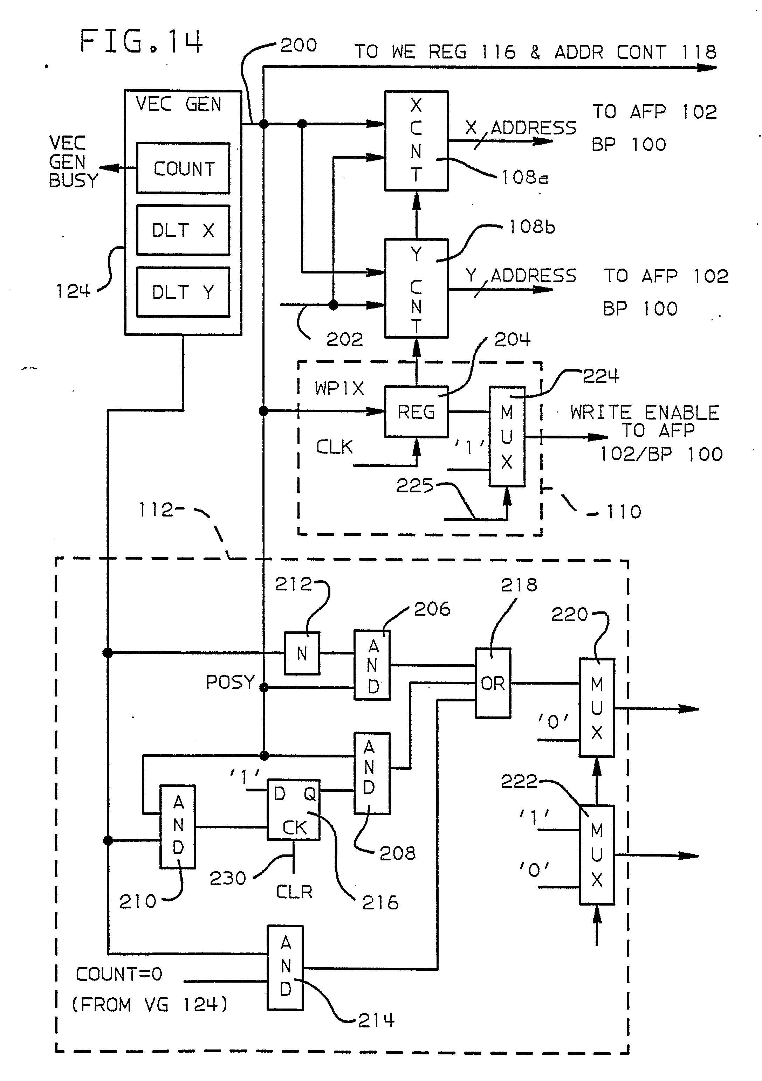

Fig. 14 shows a more detailed diagram of the Marked Pixel Extraction Logic 112, Address Counter 108 and WRITE Enable Register Selector Logic 110, in conjunction with the Vector Generator 124. As shown, line 200, containing posx, dirx, posy, diry and wpix, is an output of Vector Generator 124. From it, posx and dirx are applied to the X Address Counter 108a and posy and diry are to the Y Address Counter 108b. Note line 202 which is from Front End Processor 42 and Scan Area Register Logic 128 (Fig. 9), and which permits initial values to be loaded in registers 108a and 108b. Front End Processor 42 loads registers 108a, 108b at beginning of Boundary Plot mode. Scan Area Register Logic 128 loads 108a, 108b at the beginning of Area Fill mode. Wpix is extracted from line 200 and applied to register 204 in the Write Enable Register/Selector Logic 110. Posy is extracted from line 200 and applied to the inputs of AND gates 206, 208, and 210. The other input of AND gate 210 is a signal corresponding to the sign of delta y ("0" = positive, "1" = negative), from Vector Generator 124. The sign of delta y signal is also applied via inverter 212 to the other input of AND gate 206, and to one input of a further AND gate 214. The other input of AND gate 214 is the count = 0 signal from Vector Generator 124. The output of AND gate 210 is applied to the clock input of a D-type flip-flop, the D input of which is latched to a "1". The Q output of D flip-flop 216 is applied to the other input of AND gate 208, the output of which is applied to one input of OR gate 218. Another input of OR gate 218 is from the output of AND gate 206. The third input of OR gate 218 is the output of AND gate 214. The output of OR gate 218 is applied to one input of a multiplexer 220, the other input of which is latched to a "0". Another multiplexer 222 has one input latched to a "1" and another input latched to a "0". Both multiplexers 220 and 222 are selected by a signal which selects "0" for clear mode.

The output of register 204 in the Write Enable/Selector Logic 110 is applied to one input of a multiplexer 224, the other input of which is latched to a 1. Multiplexer 224 is selected to Clear mode by a signal value of 1 on its select input 225. The output of multiplexer 224 is applied to the Write Enable input of Area Fill Bit Plane 102 and Bit Plane 100.

The output of multiplexer 220 is the WRITE Signal and is applied to the Write data input of the Area Fill Bit Plane 102. The output 221 of multiplexer 222 is applied to the Write data line of the Bit Plane 100. Note that the Clear input of 230 of D flip-flop 216 is clocked after one line is drawn and before the drawing of the next line begins.

It will be appreciated that the Marked Pixel Extraction Logic 112 implements the algorithm described above in connection with the selection of marked pixels. Thus, the output of AND gate 208 is high when the condition exists that the pixel is not the first pixel. This occurs when there is a y coordinate change, delta y is negative and the pixel is not the first one with changed Y coordinates. Likewise, the output of AND gate 214 is high when the last pixel is being written. This occurs when delta y is negative and it is the last pixel of the line. The output of Counter 108a is applied to the Area Fill Bit Plane 102 and to Boundary Bit Plane 100 as is the output of Y counter 108b.

Returning again to Fig. 13, note that as the boundary is drawn to Boundary Bit Plane 100, it is also drawn to the Video Pixel Memory 32. In the boundary plot mode, the input of multiplexer 250 is selected for boundary mode which applies the Boundary Color Register 120 output to the data line of the Video Pixel Memory 32. It will be appreciated that in this mode the boundary is drawn in the Video Pixel Memory 32 in the selected Boundary Color.

After each vector is drawn the vector generator returns a signal, VGEND, on signal line 260 to the Front End Processor 42. After the Front End Processor 42 has provided the data for the last vector, and receives the VGEND signal on line 260, it issues a "Start Area Fill" signal to the Scan Control Logic 126 (Fig. 9).

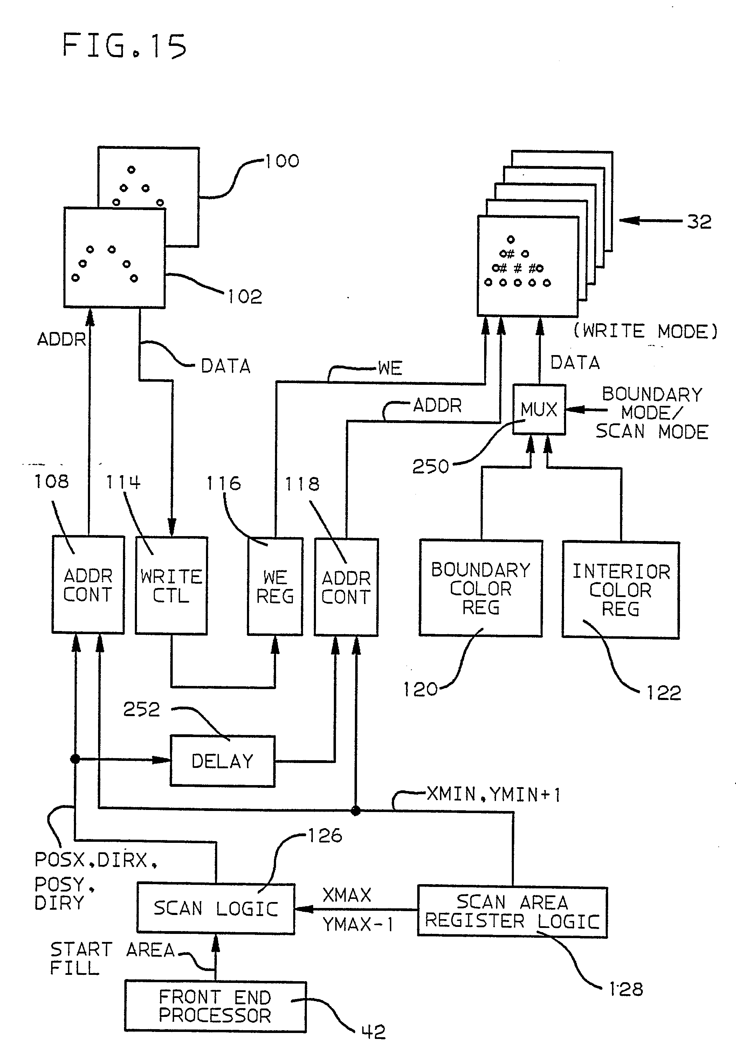

The Scan mode will now be described in connection with Fig. 15, which is a partial diagram of the embodiment depicted in Fig. 9, illustrating those parts of the embodiment involved in the Scan mode.

In the Scan mode, the Scan Control Logic 126 controls the Area Fill system. First, it loads xmin and ymin + 1 to Address Counters 108 and 118. Next, it sets the Area Fill Bit Plane 102 and Boundary Bit Plane 100 to READ mode. It also selects, via multiplexer 250, the interior colour for Video Pixel Memory 32.

Following the above initialization, the Scan Control Logic 126 generates a posx signal which is applied to Address Counter 108 to increment it. This posx signal is also sent to Address Counter 118, however through Delay Circuit 252, which delays it by one clock cycle. This delay compensates for the delay in accessing data from the Area Fill Bit Plane 102. In the scan mode, decisions concerning the writing of data to the Video Pixel Memory 32 depend upon data which is read out from the Area Fill Bit Plane 102. Thus the one clock cycle delay provided by Delay Circuit 252 is necessary to provide time to make that decision. Write control logic 114, described in more detail below, handles the decision to write or not.

When the X counter value of Address Counter 108 reaches xmax, provided by the Scan Area Register Logic 128, the Scan Control Logic 126 reloads the X counter of Address Counters 108 and 118 with xmin and sends a posy signal to increment the Y counter of Address Counter 108. Scanning proceeds for this next line, and so forth. Scanning continues until the Y counter value of Address Counters 108 and 118 reaches ymax - 1. After scan for ymax - 1 is finished, the Scan Control Logic 126 enters the CLEAR mode to clear the Boundary Bit Plane 100 and Area Fill Bit Plane 102 for the next Area Fill operation.

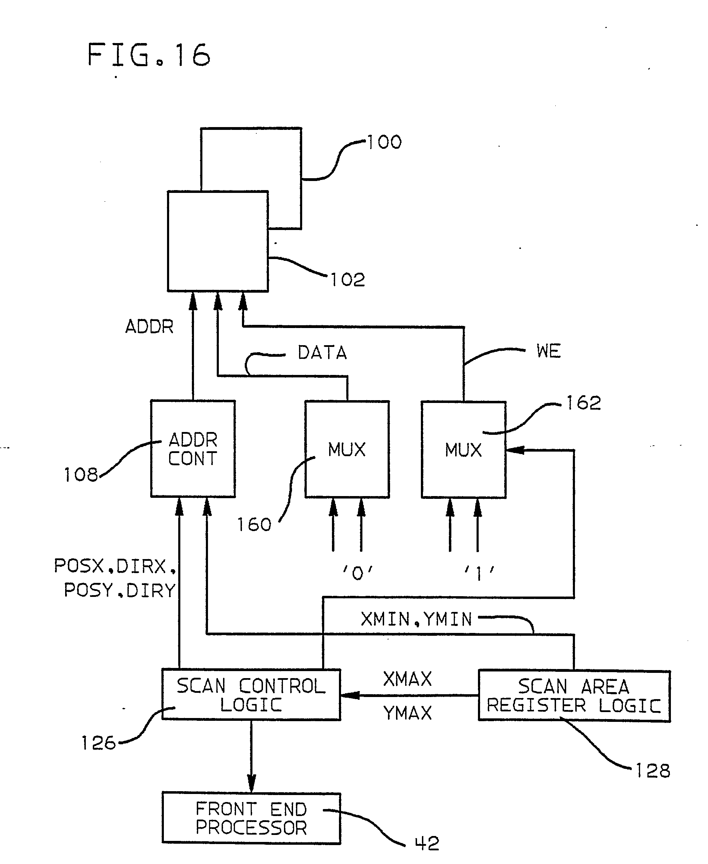

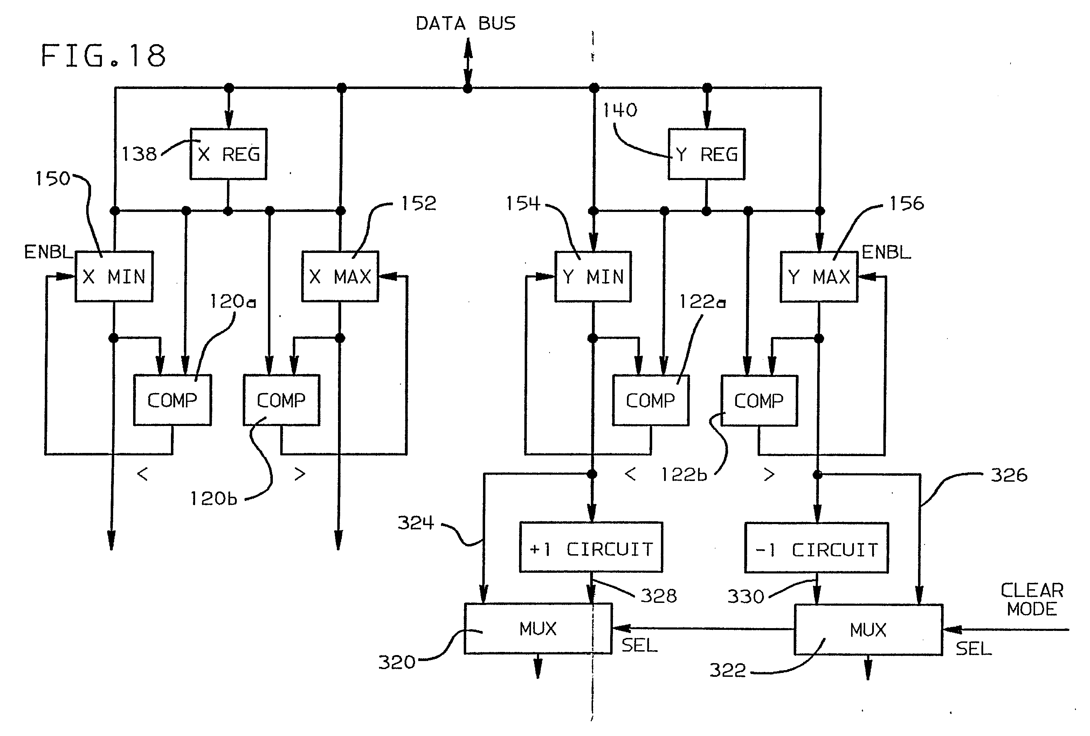

Referring now to Fig. 16, in the CLEAR mode the Scan Control Logic 126 again controls the operation of the Area Fill system. First, the Scan Control Logic 126 sets the Boundary Bit Plane 100 and Area Fill Bit Plane 102 to the Write mode, and selects multiplexer 160 to provide a "0" to the data line and multiplexer 162 to provide a "1" to the Write enable line for both planes 100, 102. It also selects ymin and ymax, instead of ymin + 1 and ymax - 1, respectively (see Fig. 18, below, for further details). Although not shown in Fig. 16, the Scan Control Logic also disables Write to the Video Pixel Memory 32.

The Scan Control Logic 126 then scans the area specified in the Scan Area Register Logic 128.

When scanning for the area is finished, the Scan Control Logic 126 provides an "End Area Fill" signal to the Front End Processor 42. Then Front End Processor 42 sets Scan Area registers as follows: xmin = 1028; xmax = 0; ymin = 1023; and ymax = 0. The system is now ready for the next Area Fill operation.

The Scan Area Resister Logic 128 of the preferred embodiment of the present invention will now be described in more detail.

As mentioned above, to reduce the area to be scanned in the Scanning Mode, the hardware of the preferred embodiment of the present invention keeps track of the extents of a minimum rectangular area which includes the polygon completely. An example of such a minimum rectangular area is shown in Fig. 17. The pel points 262 of a polygon 260 are shown, as are lines 264, 266, 268, 270, depicting xmin, xmax, ymin and ymax, respectively for polygon 260. The Scan Area Register Logic of the preferred embodiment of the present invention operates with assistance from the Front End Processor 42 and Scan Control Logic 126 to load the beginning address of the extent shown in Fig. 17 to address counters 108, 118. The end address of the extent is stored in the Scan Area Register Logic 128 for use by comparison by Scan Control Logic 126.

The Scan Area Register Logic 128 is shown in detail in Fig. 18. The operation of the Scan Area Register Logic 128 in Scan mode is as follows. Assume the processing of a polygon comprising three vertices: (x1,y1), (x2,y2), and (x3,y3). Initially, the Front End Processor 42 (Fig. 9) loads the value of 1023 into xmin register 150 and 0000 into xmax register 152. It also loads the value of 1023 into ymin register 154 and 0000 into ymax register 156. It then loads x1 and y1 into the X register 138 and Y register 140, respectively. Then, the contents of xmin 130 and X register 220 are compared in comparator 120a, and the contents of xmax 132 and X register 138 are compared in comparator 120b. Similarly, the contents of ymin 154 and Y register 140 are compared in comparator 122a and the contents of ymax 156 and Y register 140 are compared in comparator 122b. Xmin 150, xmax 152, ymin 154 and ymax 156 may be updated as a result of this comparison operation, depending upon the result. This process is then repeated, with the values x2 and y2 being loaded into X register 138 and Y register 140, respectively.

During Clear mode, multiplexers 320, 322 select lines 324, 326, respectively. Otherwise, lines 328, 330 are selected. This eliminates the unnecessary scanning of the top and bottom boundaries of the extent.

After drawing the line from (x1,y1) to (x2,y2), the Front End Processor 42 loads x3 and y3 to X register 138 and Y register 140, respectively. The aforementioned updating process is then performed for this line, and so forth. The result is that the aforementioned extents addresses are stored in registers 150, 152, 154, 156.

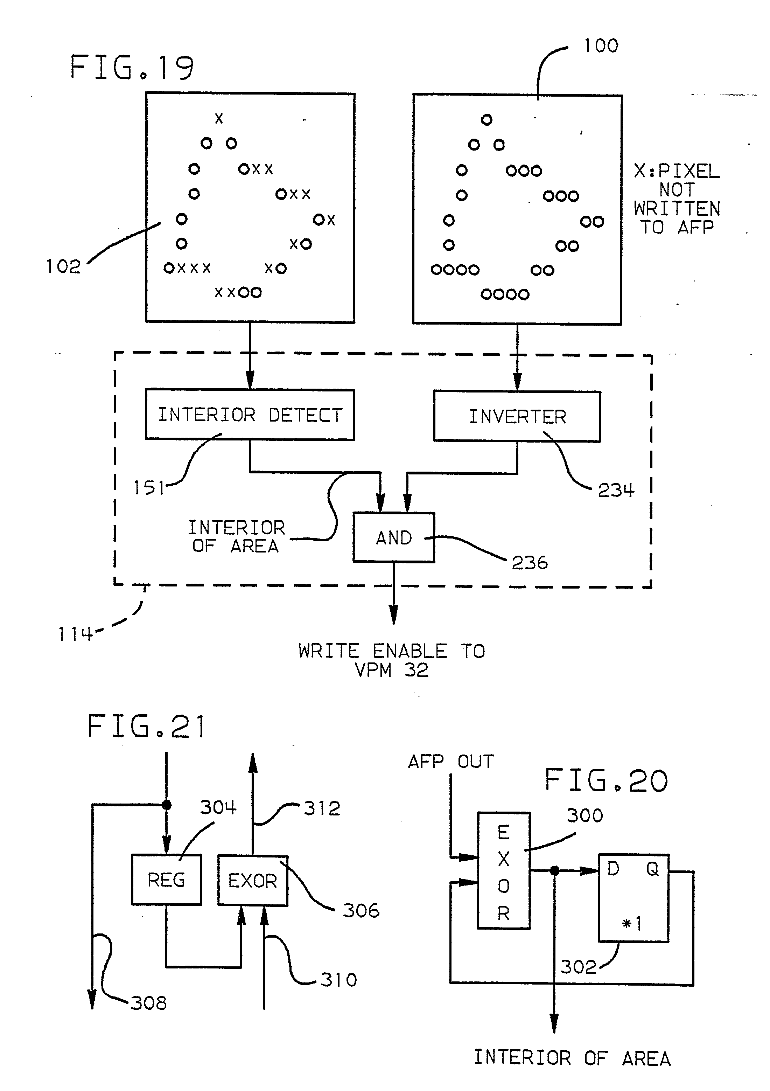

Fig. 19 shows the operation of the Write Control Logic 114. It will be recalled in connection with the discussion accompanying Fig. 13 that as the Boundary Bit Plane 100 is being written, the Video Pixel Memory 32 (Fig. 9) is also being written. As shown in Fig. 18, read-out from the Boundary Bit Plane 100 is inverted by way of inverter 234 before being applied to one input of AND gate 236. The output of Area Fill Bit Plane 102 register 230 is applied, through Interior Detect Circuit 151, to the other input of AND gate 236. In this way, the boundary bits are excluded from the writing of the area fill bits to the VPM 32.

Fig. 20 shows the Interior Detect Circuit 151 of Fig. 19. As shown, it comprises an Exclusive OR 300 the output of which is provided to the D input of a D flip-flop 302, and which is also the output of the circuit itself. The net affect of the circuitry is to act as a toggle which is turned on when the first Marked Pixel in a scan line is encountered, and is turned off when the second in the Scan Line is encountered.

Fig. 21 is a detailed diagram of the Exclusive OR portion of the Exclusive OR/Passthru Circuit 106 of Fig. 9. It comprises a register 304 and Exclusive OR 306, arranged as shown. Line 308 is the signal line from the data output of the Area Fill Bit Plane 102. Line 312 is the data input line for the Area Fill Bit Plane 102. Line 310 is the signal line Pixel Extraction Logic 112 in the Boundary Plot mode. In the Scan Mode data is read from the Area Fill Bit Plane 102 and provided on line 308. In the Boundary Plot mode, however, writing to the Area Fill Bit Plane 102 is done in a read/modify/write mode, with the incoming data becoming Exclusive ORed with the existing data at the pel location being written. The affect of the circuitry is to eliminate single pixel points where vector lines cross. It will be recalled that such single points give rise to an erroneous area fill line being written from that crosspoint to the right-hand side of the screen.

Thus, while the invention has been described with reference to preferred embodiments thereof, it will be understood by those skilled in the art that various changes in form and detail may be made without departing from the scope of the invention.

**Claims**

1. A computer graphics display system including system memory and a processor for converting data corresponding to the position of polygon display object vertices to pixel data for read-out to a display, a system for providing area fill for the objects, comprising:

a) pixel memory means for storing a value for each pixel in a display object, including means for storing for separate identification a value for each marked edge pixel of the object;

b) boundary means for generating the pixels comprising the boundary of said display object;

c) first line generator means for generating marked edge pixels in said pixel memory means by processing pairs of said display object vertices by means of an operation that utilizes the value of the next pixel to be processed in processing a current pixel;

d) second line generator means, responsive to said marked edge pixels, for generating the pixels of the interior of said display object; and

e) processor means for controlling the operation of said memory means, said boundary means, said register means and said line generator means to generate and store the boundary pixels and the interior pixels in said pixel memory means.

2. A system according to Claim 1 wherein said marked pixel means comprises Bresenham pel means for generating pixels using the Bresenham algorithm operating on the end points of the vectors which comprise a polygon.

3. A system according to Claim 2 wherein said Bresenham pel means further comprises extraction means for generating pels only when, wherein the x and y values of the pel currently being processed are X and Y, respectively, and the x and y values of the next pel to be processed are X′ and Y′, respectively:

$Y' > Y$; or

$Y' < Y$, and $(X,Y)$ is not the first pel in the line segment with this property; or

the y-coordinate of the ending point is less then the y-coordinate of the beginning point and $(X,Y)$ is the last pel in the line segment.

4. A computer graphics display system including system memory and a processor for converting data corresponding to the position of polygon display object vertices to pixel data for read-out to a display, a system for providing area fill for the objects, comprising:

a) pixel memory means for storing a value for each pixel in a display object, including means for storing for separate identification a value for each marked edge pixel of the object;

b) boundary means for generating the pixels comprising the boundary of said display object;

c) first line generator means for generating marked edge pixels in said pixel memory means by processing pairs of said display object vertices by means of an operation that utilizes the value of the next pixel to be processed in processing a current pixel;

d) second line generator means, responsive to said marked edge pixels, for generating the pixels of the interior of said display object;

e) register means for storing coordinate values corresponding to the coordinate extent of a limited portion of the screen containing an object to be displayed, and for controlling the operation of said second line generator means to limit the area of operation to said limited portion of the screen; and

f) processor means for controlling the operation of said memory means, said boundary means, said register means and said line generator means to generate and store the boundary pixels and the interior pixels in said pixel memory means.

5. A system according to Claim 4, further comprising register logic means for storing coordinate values corresponding to the coordinate extent of a limited portion of the screen containing an object to be displayed, and for controlling the operation of said second line generator means to limit the area of operation to said limited portion of the screen.

6. A computer graphics display system including system memory and a processor for converting data corresponding to the position of polygon display object vertices to raster scan data for raster scan read-out to a display, a system for providing area fill for the objects, comprising:

a) pixel memory means for storing a value for each pixel in a display object, including means for storing for separate identification a value for each marked edge pixel of the object;

b) boundary means for generating the pixels comprising the boundary of said display object;

c) first line generator means for generating marked edge pixels in said pixel memory means;

d) second line generator means, responsive to said marked edge pixels, for generating the pixels of the interior of said display object;

e) register logic means for storing coordinate values corresponding to the coordinate extent of a limited portion of the screen containing an object to be displayed, and for controlling the operation of said second line generator means to limit the operation of said second line generator means to limit the area of operation to said limited portion of the screen; and

f) processor means for controlling the operation of said memory means, said boundary means and said line generator means to generate and store the boundary pixels and the interior pixels in said pixel memory means.

7. A system according to Claim 6 wherein said register logic means comprises:

a) means for determining the maximum and minimum x values for the end points of the vectors comprising a polygon; and

b) register means for storing said maximum and minimum x values.

8. A system according to Claim 6, wherein said register logic means further comprises:

a) means for determining the maximum and minimum y values for the end points of the vectors comprising a polygon; and

b) register means for storing said maximum and minimum y values.

9. A computer graphics display system including system memory and a processor for converting data corresponding to the position of polygon display object vertices to raster scan data for raster scan read-out to a display, a method for providing area fill for the objects, comprising the steps of:

a) generating the pixels comprising the boundary of said display object;

b) generating marked edge pixels by processing pairs of said display object vertices in a process that determines marked edge pixels in a sequence, but operation on the current pixel and on the next pixel in the sequence; and

c) generating the pixels of the interior of said display object in response to said marked edge pixels.

10. A computer graphics display system including system memory and a processor for converting data corresponding to the position of polygon display object vertices to raster scan data for raster scan read-out to a display, a method for providing area fill for the objects, comprising the steps of:

a) generating the pixels comprising the boundary of said display object;

b) for generating marked edge pixels in bit plane means;

c) storing coordinate values corresponding to the coordinate extent of a limited portion of the screen containing an object to be displayed; and

d) generating the pixels of the interior of said display object in response to said marked edge pixels, by a scanning process that is limited by said stored coordinate values.

FIG.1

46

POINTS 5,6,7..

POINT 4

POINT 3

POINT 2

POINT 1

MAINFRAME 10

GRAPHICS CONTROL PROCESSOR
20
CONTROL STORE | WORKING MEMORY
12
26

TRANSFORMATION PROCESSOR
22    28
CONTROL STORE | WORKING MEMORY
14

16

DRAWING PROCESSOR

FRONT END PROCESSOR
24    30
CONTROL STORE | WORKING MEMORY
42

44

AREA FILL SUBSYSTEM    VECTOR TO RASTER CONVERTER 36    FIXED CHARACTER GENERATOR 38

VIDEO PIXEL MEMORY
FRAME BUFFER
18    32

VIDEO LOOK-UP TABLE
40

MONITOR 34

FIG.2

FIG.6

FIG.3

FIG.7

FIG.4    FIG.8

FIG.5

# FIG.9

# FIG.10(a)

START

DELTA Y =0?

YES → EXIT

NO → (X1,Y1)⟶ CURRENT PIXEL

DELTA Y >0?

YES

NO → TO FIG. 10(b)

NEXT PIXEL⟶ CURRENT PIXEL

END OF THE LINE ?

YES → EXIT

NO

BRESENHAM ALGORITHM GENERATES NEXT PIXEL

Y-COOR CHANGED ?

NO

YES

DRAW CURRENT PIXEL

# FIG.10(b)

FROM FIG.
10(a)

# FIG.11(a )

# FIG.11(b)

# FIG.(11g)

# FIG.11(c)

# FIG.(11d)

# FIG.11(e)

# FIG.11(f)

## FIG.17

## FIG.12

FIG.13

FIG.14

0 250 868

# FIG.15

# FIG.16

FIG.18

DATA BUS

X REG — 138

Y REG — 140

150

ENBL

X MIN

X MAX — 152

154

Y MIN

Y MAX — 156

ENBL

120a

COMP

COMP

122a

COMP

COMP

<

120b

>

<   122b

>

324

+1 CIRCUIT

-1 CIRCUIT

326

328

330

CLEAR
MODE

MUX

SEL

MUX

SEL

320

322

0 250 868

FIG.19

X:PIXEL
NOT
WRITTEN
TO AFP

INTERIOR DETECT

INVERTER

INTERIOR
OF AREA

AND

WRITE ENABLE TO
VPM 32

FIG.21

REG

EXOR

AFP OUT

FIG.20

E X O R

D    Q

*1

INTERIOR OF AREA